# EUROPEAN PATENT SPECIFICATION

(11) **EP 3 919 787 B1**
(45) Date of publication and mention of the grant of the patent: **09.10.2024**
(21) Application number: 19912868.7
(22) Date of filing: 20.08.2019
(51) Int. Cl.: F16K 3/314, F16K 3/28, F16K 27/04, F16K 3/02

(54) **LOW-TORQUE WATER SHUTOFF-TYPE LINE STOPPING VALVE USING STEPWISE PRESSURE POINT SUPPORT**
WASSERABSPERRVENTIL MIT NIEDRIGEM DREHMOMENT UND STUFENWEISER DRUCKPUNKTUNTERSTÜTZUNG
VANNE D'ARRÊT DE LIGNE DU TYPE À COUPURE D'EAU À FAIBLE COUPLE UTILISANT UN SUPPORT DE POINT DE PRESSION PAS À PAS

(30) Priority: 31.01.2019 KR 20190013151
(43) Date of publication of application: 08.12.2021
(73) Proprietor: Kim, Jae Hyun, Seoul 05096 (KR)
(72) Inventor: HONG, Hyun Bae, Seoul 01469 (KR); GU, Dong Ryul, Yongin-si Gyeonggi-do 17099 (KR); KIM, Jae Hyun, Seoul 05096 (KR)
(74) Representative: dompatent von Kreisler Selting Werner - Partnerschaft von Patent- und Rechtsanwälten mbB
(86) International application number: PCT/KR2019/010549
(87) International publication number: WO 2020/159023

(56) References cited:
- EP-A1- 3 321 550
- JP-A- S59 147 169
- JP-A- S59 147 169
- KR-A- 20120 111 355
- KR-B1- 101 067 247
- KR-B1- 101 157 077
- KR-B1- 101 157 077
- KR-B1- 101 620 049

## Description

### [Technical Field]

The present invention relates to a low-torque water shutoff-type line stopping valve using stepwise pressure point support. KR101157077 B1 describes a hot tapping valve mounting device comprises a scale removing device and a self-locking valve disk. After removing a drilling device, the scale removing device is assembled to an opening of an upper hemispherical body of a valve body and removes scale from the inner surface of a water supply pipe through a bore hole. A bonnet is assembled to the opening of the upper hemispherical body of the valve body. After removing the scale removing device, the valve disk is embedded in the bonnet and moved up and down so that the valve disk is pressed to the inner surface of the water supply pipe with low torque.
KR20120111355 A discloses a roller guide soft thread gate valve is provided to enhance operability with rolling contact by a roller and to solve problems following from the abrasion of a thread because a guide groove and the thread covering the exterior of a disc are not directly fractionized. CONSTITUTION: A roller guide soft thread gate valve comprises a body, a disc recessed part, and a disc. The disc recessed part is formed in the body. The disc has guide protrusions which are inserted in guide grooves to be symmetrically formed in the disc recessed part. The guide protrusions have rolling units to form roller coupling grooves in the guide protrusions at a right angle to the guide grooves. The rolling units form roller coupling grooves in the guide protrusions. Rollers contacting to the guide grooves are inserted in the roller coupling grooves and are axially coupled to the guide protrusions by pins. JPS 59147169 A describes valve body of a sluice valve with an elastic circular projection, the outer periphery of which decreases in diameter upward, is disposed on the upper portion of a valve body, and a circular cut portion increasing in diameter downward is mounted on the lower portion of the peripheral edge of a valve rod piercing hole of a valve cover. The axis of a valve rod, the elastic circular projection and the circular cut portion are disposed at the concentric positions, and a valve rod diameter increasing portion not threaded is positioned at a part of the valve rod corresponding to the circular cut portion of the valve cover, and a valve rod threaded portion of a smaller diameter than the valve rod diameter increasing portion is disposed on the lower portion of the valve rod diameter increasing portion.

More particularly, the present invention relates to a line stopping valve for a line stopping method, the valve being used for the line stopping method enabling construction without shutting off water when a pipe is replaced or repaired, and a disc for low-torque water shutoff used in the line stopping valve.

In general, foreign substances are inevitably generated on the inner wall of a pipe as time passes, and foreign substances are unavoidably generated during an operation such as pipeline repair. The foreign substances float in the pipe due to external impact applied to the pipe, the flow of fluid or the like, a large amount of the foreign substances accumulates on the bottom of the inside of the pipe due to gravity, thereby, the water stopping performance of the valve disc mounted in the pipe is degraded, and performance degradation worsens as time elapses after the disc is mounted. Particularly, unlike a conventional valve installation method using the main body of a valve as a water stopping surface of a disc, the line stopping valve using the inner wall of the pipe as a water stopping surface, as in the present invention, has a more serious problem of water stopping performance degradation due to the foreign substances.

On the other hand, in the disc according to the present invention, when the disc comes into contact with the inner surface of the pipe so as to block a flow path, two points of the disc initially come into contact with and are supported by the inner surface of the pipe, then the two points supported by pressure sweep the inner surface of the pipe outwards, and the disc finally achieves surface contact with and is supported by the inner surface of the pipe while removing foreign substances from the inner surface of the pipe so as to improve support power and airtightness, and the disc protrudes to support the pipe in the center after making surface contact and being supported so as to further improve airtightness.

Therefore, the multistage-type disc according to the present invention may enable water stoppage while sweeping out foreign substances, which disrupt water stoppage, using lateral dispersion force due to the interaction of an auxiliary groove part 24a and a sweeping groove part 12a from a point in time at which the disc comes into contact with the bottom surface of the pipe, and may reduce power required for water stoppage compared to the conventional disc so as to achieve water stoppage using lower torque, thereby being capable of being used as a low-torque water shutoff-type disc and solving problems caused by water stopping performance degradation due to the foreign substances.

### [Background Art]

In general, gas pipes configured to supply city gas and water supply and sewage pipes configured to supply water and to transport wastewater or sewage are disposed like a spider's web in a residential area in which people reside. Further, as the use of city gas is rapidly increased now, these pipes are further increased in number. In addition, various pipe lines configured to supply water for industrial use, chemical materials or the like are installed in various factories.

In order to install a shutoff valve to repair such a pipe line without cutting off fluid supply, a line stopping valve insertion method, in which a fluid in an existing pipe is cut off so that the fluid is allowed to flow through a bypass pipe or a shutoff valve is installed without shutting off the fluid in an existing pipe, is performed.

In such a conventional line stopping valve insertion method which is disclosed in Korean Patent Application No. 10-1998-005477, after a hole is formed by perforating a pipe, the hole is formed into a circumferential coupling hole of a long-hole type using a cutting tool by moving (rotating) a punching apparatus left and right at a designated angle in the state in which the cutting tool is disposed in the hole, the punching apparatus is removed, and then a valve apparatus is installed in the hole, and thereby, a process of installing the valve in the hole is completed.

However, in the conventional line stopping valve insertion method, during the process of tilting the conventional punching apparatus at the designated angle left and right after formation of the hole in the pipe, the height of the punching apparatus is high, and thus, the punching apparatus is caught by other existing pipes and structures and it is difficult to form the long hole extending in the circumferential direction, and when the punching apparatus is installed, a designated height is not secured and thus there may be a difficulty in installing the punching apparatus.

Due to these problems, in case that there are other existing pipes or structures around the pipe to be perforated, after the pipes, the structures, or the ground caught by the punching apparatus during rotation are demolished or another area of the ground is excavated, the punching apparatus is rotated and may thus cause inconvenience, and in case that it is difficult to perform such additional work, a punching operation for inserting the line stopping valve into the pipe is not possible, and thus, in such a situation, the punching operation at a construction site is not performed.

The applicant of the present invention filed an application for the above-described line stopping method, entitled "Punching device for construction of non-closing valve and construction method of valve using the same", and obtained a patent thereon as Korean Patent Registration No. 10-1839729.

Research on the shapes of valves used in the line stopping method applied in the above-described manner is being carried out.

As related technology, there are Korean Patent Registration No. 10-1067247 entitled "Valve disc for water control valves" (Related Art Document 1), Korean Patent Registration No. 10-1577777 entitled "Mounting non-water blockage valve" (Related Art Document 2), and Korean Patent Registration No. 10-1157077 entitled "Device for mounting non-water blockage valve on pipe".

Related Art Document 1 discloses that, when same diameter punching is performed so as to install a line stopping valve in a pipe, spaces are formed at the left and right sides of the inside of the pipe, water is not completely stopped, in order to solve this problem, when a disc is vertically lowered and pressure is applied to the lower portion of a disc extension pin, the disc is rotated horizontally left and right along a circular curve formed on a disc body and is expanded, and simultaneously, a disc rubber member surrounding the outer surface of the disc is also expanded, thereby achieving complete water stoppage.

The above-described technology relates to a valve disc for line stopping valves including an elevation guide unit slidably combined with the upper portion of a valve body of a line stopping valve so as to be raisable and lowerable, and a disc unit installed under the elevation guide part so as to directly open and close the inner flow path of a pipe, such as a water supply pipe, and the disc unit is manufactured in a tube type having a retractile hollow part, and includes a lower pressurization surface configured to come into contact with the inner surface of the bottom portion of the pipe as seen from the cross-section of the pipe, and an expansion side configured to change the volume of the disc unit in the horizontal direction in the state of being interlocked with the compressive force of the lower pressurization surface.

Related Art Document 2 relates to a disc expansion-type line stopping valve which has an expansion and contraction function in which, when a disc is put into a pipe through a hole formed in the pipe, the width of the disc is expanded in the lateral direction in the state of being interlocked with the compressive force of the disc in the vertical direction so as to block the inside of the pipe, thereby improving adhesiveness of the line stopping valve to the pipe and watertightness of the disc to the pipe and reducing the size of the hole formed through the pipe.

Related Art Document 3 relates to a device for constructing a line stopping valve, and more particularly, to a device for constructing a line stopping valve in which a valve disc having an improved structure enabling water stoppage at a low torque through a self-locking function is provided, and scales is easily removed from the inner diameter surface of a water supply pipe,

the device includes a valve seat configured to achieve complete water stoppage in the water supply pipe using the self-locking function due to elastic deformation of a stainless steel rod or the self-locking function due to expansion of a tube by accepting water depending on water pressure, and a scale removal unit configured to easily remove scales from the inside of the water supply pipe, and the valve disc of the line stopping valve is more completely adhered to the inner diameter surface of the water supply pipe, thereby achieving more complete water stoppage.

However, the applicant of the present invention proposes a new type of disc valve having a configuration, which the conventional disc valves do not have, so as to create effects thereby.

That is, the conventional disc valves have a one-point support structure in which the disc of the disc valve is basically supported by the inner surface of a pipe at one point so as to block a flow path, or employ a slightly modified structure therefrom. Particularly, the disc valve disclosed in Related Art Document 1 has this structure.

The disc valve of Related Art Document 2 is configured to imply two-point support, but basically differs from two-point support in configuration and thus differs from two-point support in action relationships thereby, thus exhibiting different effects from two-point support. Such a structure is not capable of being compared to the present invention.

Further, the disc valves disclosed in Related Art Document 2 and Related Art Document 3 are not capable of exhibiting an effect of cleaning a contact area of the inner surface of a pipe depending on sweeping, as in the present invention.

### [Disclosure]

### [Technical Problem]

Therefore, the present invention has been made in view of the above problems, and it is an object of the present invention to provide a multistage-type disc valve, more particularly, a low-torque water shutoff-type line stopping valve using stepwise pressure point support, used in a line stopping method enabling construction without shutting off water when a pipe is replaced or repaired,
which includes a line stopping valve used for the line stopping method enabling construction without shutting off water when the pipe is replaced or repaired, and a disc for low-torque water shutoff used in the line stopping valve, and
in which, when the disc comes into contact with the inner surface of the pipe so as to block a flow path, two points of the disc initially come into contact with and are supported by the inner surface of the pipe, then the two points supported by pressure sweep the inner surface of the pipe outwards, and the disc finally achieves surface contact with and is supported by the inner surface of the pipe while removing foreign substances from the inner surface of the pipe so as to improve support power and airtightness, and protrudes to support the pipe in the center after making surface contact and being supported so as to further improve airtightness.

It is another object of the present invention to provide a low-torque water shutoff-type line stopping valve using stepwise pressure point support, which includes a disc configured to solve water stopping performance degradation caused by accumulation of foreign substances on the bottom of the inside of a pipe.

### [Technical Solution]

In accordance with the present invention, the above and other objects can be accomplished by the provision of a low-torque water shutoff-type line stopping valve using stepwise pressure point support, including,
a valve body (110) mounted on a pipe (100) so as to surround an outer diameter thereof; a punching apparatus mounted in an opening (114) of an upper hemispheric body (112) of the valve body (110) and configured to form a hole (102) in an outer diameter surface of the pipe (100); and a bonnet (130) mounted at an upper portion of the valve body (110) so as to interference-fit a multistage-type disc (200) into the pipe,
wherein the line stopping valve include,
the low-torque water shutoff-type multistage-type disc (200) configured to be easily adhered to an inner surface of the pipe so as to support the inner surface of the pipe while removing foreign substances from the inner surface of the pipe, and thus to reduce power required for water stoppage compared to a conventional disc so as to be capable of stopping water using lower torque,
wherein the multi-stage disc (200),
includes a rubber member (10) and a casting member (20), and
when the multi-stage disc comes into contact with the inner surface of the pipe so as to block a flow path, two points of the multistage-type disc initially come into contact with and are supported by the inner surface of the pipe, then the two points supported by pressure sweep the inner surface of the pipe outwards, and thus the multistage-type disc finally achieves surface contact with and is supported by the inner surface of the pipe so as to remove the foreign substances from the inner surface of the pipe and thus to clean an area of the pipe which comes into contact with the multi-state type disc.

The rubber member (10) includes
a perforated area closing part (11) inserted into a perforated area of the pipe so as to perform a closing function,
an inner area blocking part (12) configured to extend in the downward direction of the closing part (11) and to have a narrower width than the closing part (11) so as to cut off the inside of the pipe,
a first step (11a) formed between the closing part (11) and the blocking part (12) and configured to have a slope so as to form a wide top and narrow bottom structure,
guide parts (11b) configured to protrude from both sides of the closing part (11) and to have one flat surface, and guided along an inner wall of the bonnet (130),
a column (130) configured to extend upwards from the closing part, and
a bracket (14) located on the column (13).

The inner area blocking part (12),
is formed to bend along the inner shape of the pipe, and includes
a sweeping groove part (12a) configured to be concave in a V-shape and formed on an entirety of a lower surface thereof and side surfaces thereof at one side, and
a shape-maintaining protrusion (12b) configured to protrude convexly in a v-shape and formed in remaining areas of the side surfaces thereof other than the sweeping groove part (12a).

The casting member (20) includes
a bracket (21) connected to a stem (132) of the bonnet (130),
a column (22) configured to extend downwards from the bracket (21),
a closing part frame (21) formed at a lower portion of the column (22) and configured to have the same shape as the perforated area closing part (11) and a smaller size than the perforated area closing part (11) so as to be located inside the perforated area closing part (11),
a second step (23a) formed to have a stepped shape so as to be located inside the first step (11a) of the rubber member (10),
second guide parts (23b) configured to protrude upwards from both sides of the closing part frame (23) so as to be located inside the guide parts (11b) of the rubber member (10), and
a blocking part frame (24) formed at the lower portion of the closing part frame (23) and located inside the inner area blocking part (12) of the rubber member (10),
the blocking part frame (24) may include an auxiliary groove part (24a) configured to be concave inwards and formed on lower and side surfaces thereof.

The shape-maintaining protrusion (12b),
is formed on the side surfaces of the inner area blocking part (12) at one side, and
the shape-maintaining protrusion (12b),
may come into direct contact with the inner surface of the pipe so as to block the flow path, and
may prevent the sweeping groove part (12a) from spreading when the sweeping groove part (12a) is returned to an original shape thereof after use of the disc valve.

### [Advantageous effects]

A low-torque water shutoff-type line stopping valve using stepwise pressure point support according to the present invention,
in which, when a disc comes into contact with the inner surface of a pipe so as to block a flow path, two points of the disc initially come into contact with and are supported by the inner surface of the pipe, then the two points supported by pressure sweep the inner surface of the pipe outwards, and the disc finally achieves surface contact with and is supported by the inner surface of the pipe while removing foreign substances from the inner surface of the pipe so as to improve support power and airtightness, and protrudes to support the pipe in the center after making surface contact and being supported so as to further improve airtightness, may have a configuration and effects which are not exhibited by conventional line stopping valves.

Further, the disc according to the present invention may reduce power required for water stoppage to be lower than that of a conventional disc so as to be capable of stopping water using lower torque, through the interaction of an auxiliary groove part (24a) and a sweeping groove part (12a) from a point in time when the disc comes into contact with the bottom surface of the pipe.

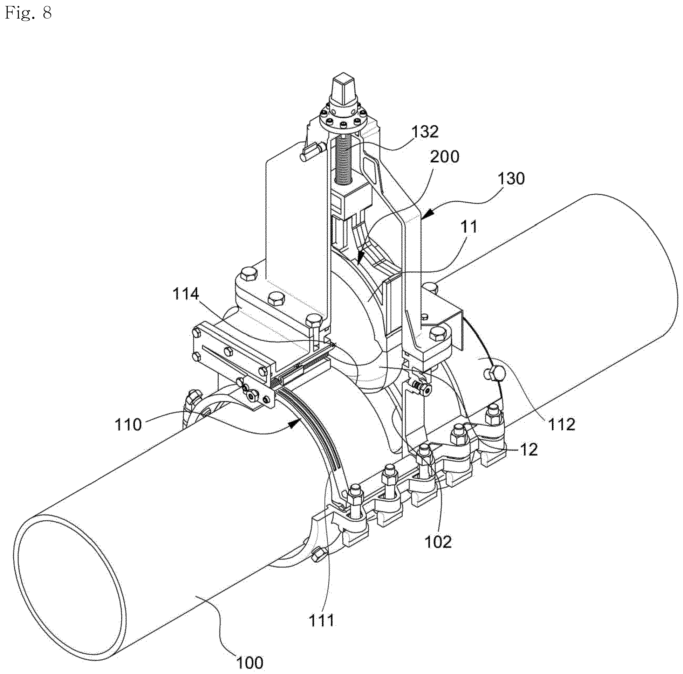

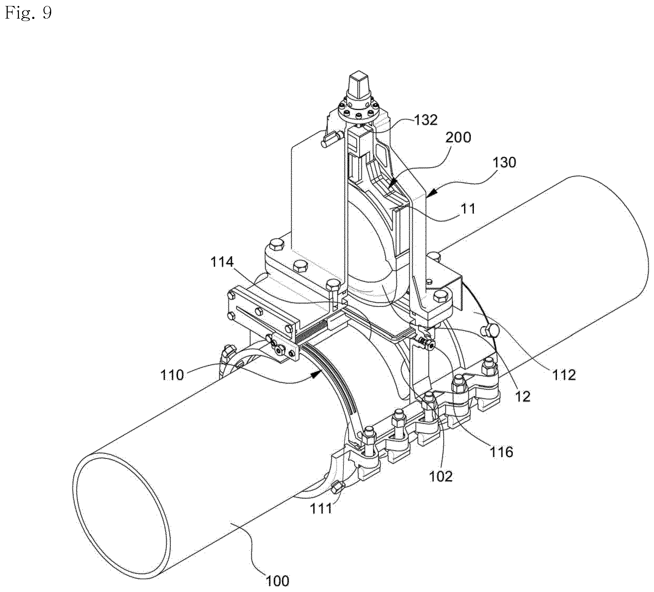

As water stoppage using lower torque is possible, a worker requires a little power to control a valve stand (a handle, which is an element vertically protruding outwards from a stem (132) of a bonnet (130) shown in FIGs. 8 and 9) to operate the valve so as to prevent damage to the valve stand and, as the power consumption is reduced, it is possible to prevent the pipe from being bent or damaged.

Further, the disc according to the present invention may solve water stopping performance degradation caused by foreign substances generated on the bottom of the inside of the conventional pipe.

### [Description of Drawings]

FIG. 1 is a perspective view illustrating the configuration of a rubber member of a multistage-type disc of a low-torque water shutoff-type line stopping valve using stepwise pressure point support according to the present invention.
FIG. 2 is a side view illustrating the configuration of the rubber member of the multistage-type disc of the low-torque water shutoff-type line stopping valve using stepwise pressure point support according to the present invention.
FIG. 3 is a perspective view illustrating the configuration of a casting member of the multistage-type disc of the low-torque water shutoff-type line stopping valve using stepwise pressure point support according to the present invention.
FIG. 4 is a perspective view illustrating combination of the rubber member and the casing member of the multistage-type disc of the low-torque water shutoff-type line stopping valve using stepwise pressure point support according to the present invention.
FIGs. 5 and 6 are views illustrating one example of insertion of the multistage-type disc into a perforated pipe using the low-torque water shutoff-type line stopping valve using stepwise pressure point support according to the present invention.
FIG. 7 is a view illustrating a process of blocking the flow path of a pipe by inserting the multistage-type disc of the low-torque water shutoff-type line stopping valve using stepwise pressure point support according to the present invention into the pipe.
FIGs. 8 and 9 are perspective views illustrating the configuration of the low-torque water shutoff-type line stopping valve using stepwise pressure point support according to the present invention.
FIGs. 10 to 28 are views illustrating one example of installation of the low-torque water shutoff-type line stopping valve using stepwise pressure point support according to the present invention.

### [Mode for Invention]

Terms or words used in the following description and the claims are not interpreted as being limited to usual or dictionary meanings, and are interpreted as having meanings and concepts according with the technical scope of the present invention based on the principle that the inventor(s) can appropriately define the concept of a term so as to describe their own invention in the best mode.

Therefore, embodiments disclosed in the description and the drawings are merely exemplary but do not represent all of the technical scope of the present invention, and thus, it will be understood that there are various equivalents and modifications as substitutes of the embodiments at the time of filing of the present invention.

Hereinafter, prior to description of the present invention with reference to the drawings, a detailed description of known functions and configurations incorporated herein will be omitted when it may make the subject matter of the present invention rather unclear.

The present invention relates to a low-torque water shutoff-type line stopping valve using stepwise pressure point support.

Concretely, the present invention relates to a line stopping valve for a line stopping method, the valve being used for the line stopping method enabling construction without shutting off water when a pipe is replaced or repaired, and a disc for low-torque water shutoff used in the line stopping valve.

In general, foreign substances are inevitably generated on the inner wall of a pipe as time passes, and foreign substances are unavoidably generated during an operation such as pipeline repair. The foreign substances float in the pipe due to external impact applied to the pipe, the flow of fluid or the like, a large amount of the foreign substances accumulates on the bottom of the inside of the pipe due to gravity, thereby, the water stopping performance of the valve disc mounted in the pipe is degraded, and performance degradation worsens as time elapses after the disc is mounted.

Particularly, unlike a conventional valve installation method using the main body of a valve as a water stopping surface of a disc, in which the state of the inside of a pipe which is installed already, such as generation of foreign substances, may not be considered, the line stopping valve using the inner wall of the pipe as a water stopping surface, as in the present invention, causes more serious water stopping performance degradation due to the foreign substances.

On the other hand, when the disc according to the present invention comes into contact with the inner surface of a pipe so as to block a flow path, two points of the disc initially come into contact with and are supported by the inner surface of the pipe, then the two points supported by pressure sweep the inner surface of the pipe outwards, and the disc finally achieves surface contact with and is supported by the inner surface of the pipe while removing foreign substances from the inner surface of the pipe so as to improve support power and airtightness, and protrudes to support the pipe in the center after making surface contact and being supported so as to further improve airtightness.

Therefore, the multistage-type disc according to the present invention may enable water stoppage while sweeping out foreign substances, which disrupt water stoppage, using lateral dispersion force due to the interaction of an auxiliary groove part 24a and a sweeping groove part 12a from a point in time at which the disc comes into contact with the bottom surface of the pipe, and may reduce power required for water stoppage compared to the conventional disc so as to achieve water stoppage using lower torque, thereby being capable of being used as a low-torque water shutoff-type disc and solving problems caused by water stopping performance degradation due to the foreign substances.

The present invention is characterized in that water stoppage to block a water flow in a water supply pipe may be easily carried out by the multistage-type disc only at a low torque and water stoppage may be more thoroughly carried out by removing scales from the inner diameter surface of the water supply pipe before construction of the line stopping valve is completed.

For this purpose, the line stopping valve according to the present invention includes a low-torque water shutoff-type and multistage-type disc 200 configured to come into surface contact with and to be supported by the inner surface of a pipe 100 while removing foreign substances from the inner surface of the pipe during a process of pressing the disc 200 against the inner surface of the pipe 100.

As shown in FIG. 8, the line stopping valve includes a valve body 110 mounted on the outer diameter of the pipe 100 to be repaired, and the valve body 110 includes a pair of hemispheric bodies, an opening 114 configured to expose the outer diameter of the pipe 100 is formed through the upper surface of an upper hemispheric body 112 among a pair of hemispheric bodies, and an auxiliary valve 116 configured to move forwards and backwards by a manual operation so as to open and close the opening 114 is installed in the upper hemispheric body 11.

Here, body packings 111 are mounted on the outer diameter of the pipe 100 before the hemispheric bodies 112 is mounted on the outer diameter of the pipe 100, that is to say, the body packings 111 are located between the pipe 100 and the hemispheric bodies.

Further, a bonnet 130 serving as another element of a line stopping valve construction apparatus and configured to press-fit the multistage-type disc 200 into the pipe 100 is assembled with the opening 114 of the upper hemispheric body 112 of the valve body 110, and the multistage-type disc 200 is installed in the bonnet 130 so as to be raisable and lowerable.

The multistage-type disc 200 installed in the bonnet 130 is easily inserted into the pipe 100 by only a low torque, and thus comes into contact with the inner diameter surface of a water supply pipe.

The multi-state type disc 200 is configured such that a casting member 20 and a rubber member 10 of the multi-state type disc 200 respectively include brackets 21 and 14 connected to a stem 132 for providing interference-fit torque and columns 22 and 13 formed integrally with the bottom parts of the brackets 21 and 14.

Concretely, the multi-state type disc 200 of the low-torque water shutoff-type line stopping valve using stepwise pressure point support according to the present invention essentially includes the rubber member 10 and the casting member 20.

Here, the rubber member 10 and the casting member 20 are integrally manufactured through injection molding.

First, the rubber member 10 will be described with reference to the accompanying drawings.

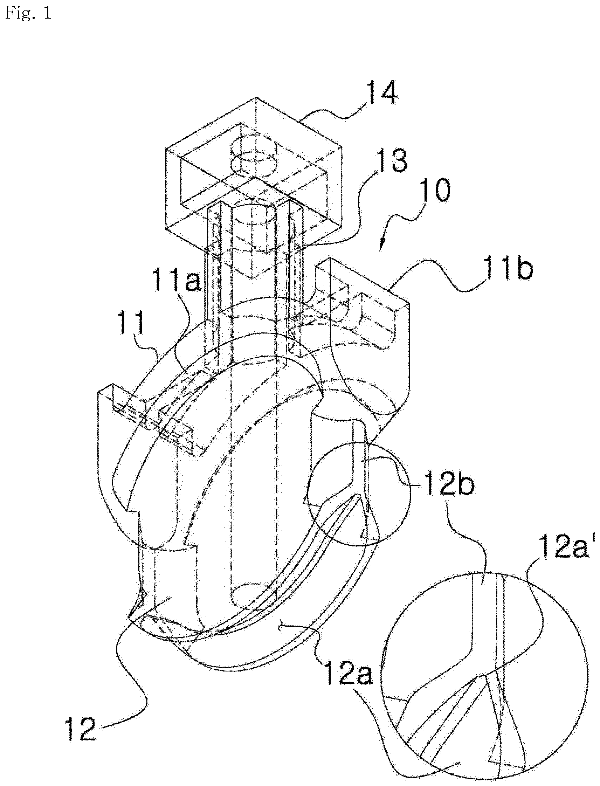

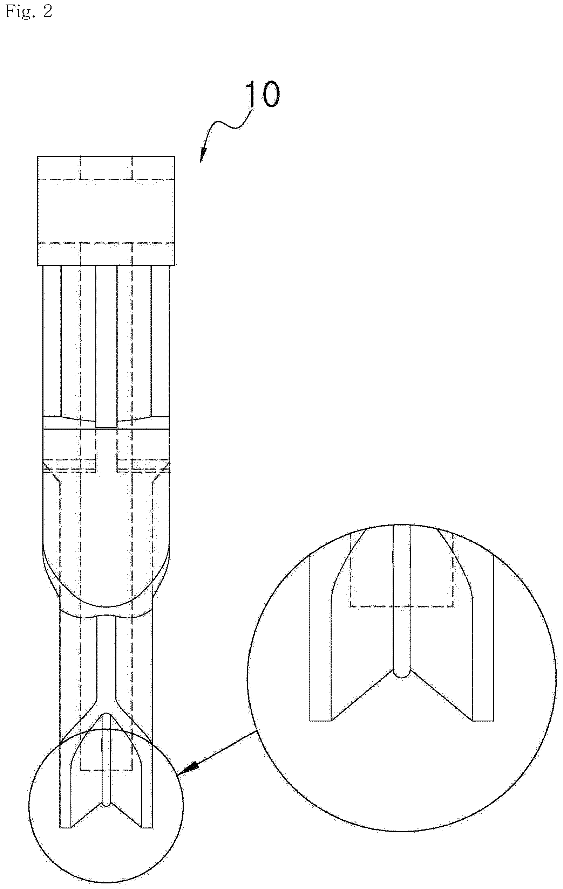

FIG. 1 is a perspective view illustrating the configuration of the rubber member of the multistage-type disc of the low-torque water shutoff-type line stopping valve using stepwise pressure point support according to the present invention, and FIG. 2 is a side view illustrating the configuration of the rubber member of the multistage-type disc of the low-torque water shutoff-type line stopping valve using stepwise pressure point support according to the present invention.

The rubber member 10 includes, as shown in the accompanying drawings,
a perforated area closing part 11 inserted into a perforated area of a pipe so as to perform a closing function,
an inner area blocking part 12 configured to extend in the downward direction of the closing part 11 and to have a narrower width than the closing part 11 so as to cut off the inside of the pipe,
a first step 11a formed between the closing part 11 and the blocking part 12 and configured to have a slope so as to form a wide top and narrow bottom structure,
guide parts 11b configured to protrude from both sides of the closing part 11 and to have one flat surface,
the column 13 configured to extend upwards from the closing part, and
the bracket 14 located on the column 13,
the inner area blocking part 12
being formed to bend along the inner shape of the pipe, and
including a sweeping groove part 12a configured to be concave in a V-shape and formed on the entirety of the lower surface thereof and the side surfaces thereof at one side, and
a shape-maintaining protrusion 12b configured to protrude convexly in a v-shape and formed in the remaining areas of the side surfaces thereof other than the sweeping groove part 12a.

Here, in case that the casting member 20, which will be described below, is inserted into the rubber member 10, the guide parts 11b may come into contact with the inner wall of the bonnet 130 and thus be guided by the bonnet 130, when the disc is raised or lowered in the state in which the disc is connected to the stem 132 using the line stopping valve described above with reference to FIGs. 8 and 9.

A flow path formed inside of the pipe is completely cut off through the perforated area closing part 11 and the inner area blocking part 12 in the above-described configuration.

The rubber member 10 is used in the state in which the rubber member 10 is combined with the outer part of the casting member 20 which will be described below, and the rubber member 10 and the casting member 20 are integrally manufactured through injection molding, as described above.

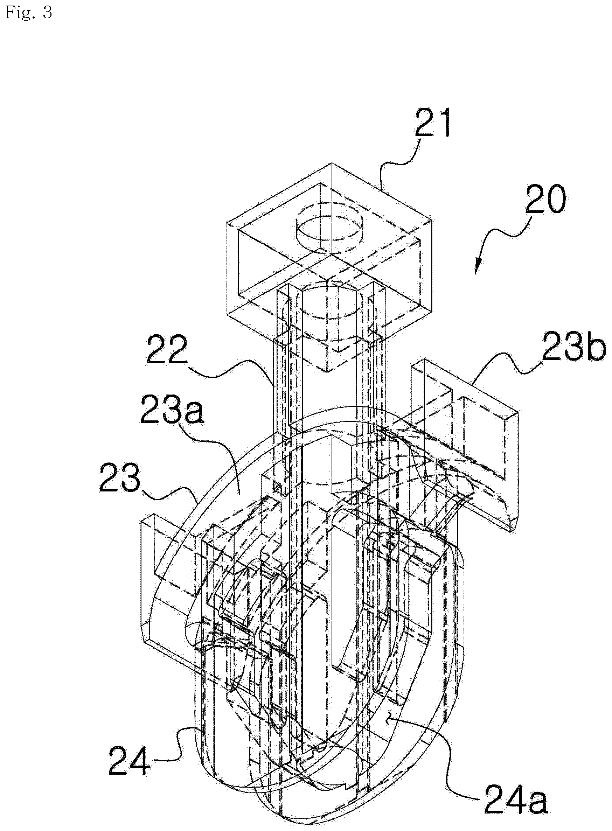

The casting member 20 will be described with reference to FIG. 3.

FIG. 3 is a perspective view illustrating the configuration of the casting member of the multistage-type disc of the low-torque water shutoff-type line stopping valve using stepwise pressure point support according to the present invention.

The casting member 20 includes, as shown in FIG. 3,
the bracket 21 connected to the stem 132,
the column 22 configured to extend downwards from the bracket 21,
a closing part frame 21 formed at the lower portion of the column 22 and configured to have the same shape as the perforated area closing part 11 and a smaller size than the perforated area closing part 11 so as to be located inside the perforated area closing part 11,
a second step 23a formed to have a stepped shape so as to be located inside the first step 11a of the rubber member 10,
second guide parts 23b configured to protrude upwards from both sides of the closing part frame 23 so as to be located inside the guide parts 11b of the rubber member 10, and
a blocking part frame 24 formed at the lower portion of the closing part frame 23 and located inside the inner area blocking part 12 of the rubber member 10,
the blocking part frame 24 including the auxiliary groove part 24a configured to be concave inwards and formed on the lower and side surfaces thereof.

Here, the blocking part frame 24 connected to the closing part frame 23 may have a narrower width than the closing part frame 23 by the second step 23a.

Further, a plurality of grooves may be formed on one side wall of the blocking part frame 24 so as to reduce the weight of a casting material and to achieve material saving, and may be formed in various shapes.

Here, in order to reinforce the column 22, a reinforcing bracket (no reference numeral) may be formed on the outer periphery of the column 22.

Further, the auxiliary groove part 24a is formed to be concave, thereby assisting the sweeping groove part 12a of the rubber member 10 to be more elastically operated.

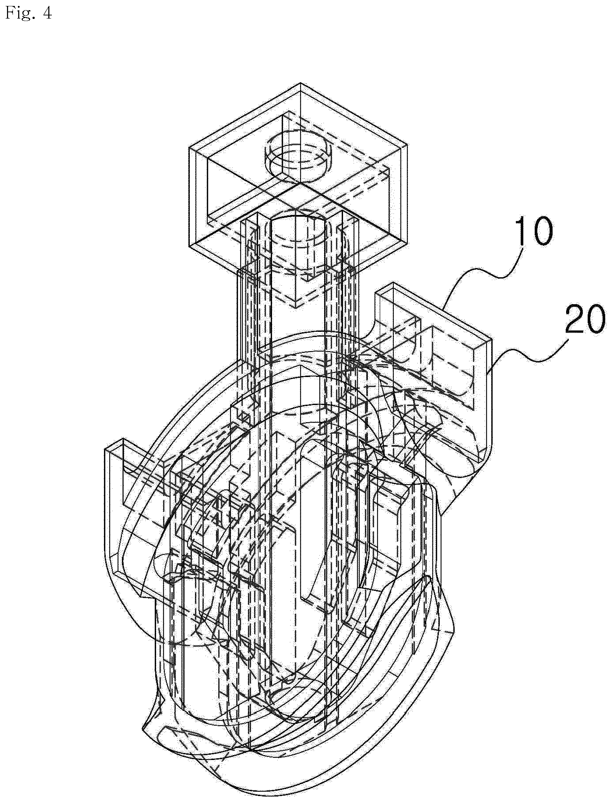

A combination form between the rubber member 10 and the casting member 20 will be described with reference to FIG. 4.

FIG. 4 is a perspective view illustrating combination of the rubber member and the casing member of the multistage-type disc of the low-torque water shutoff-type line stopping valve using stepwise pressure point support according to the present invention.

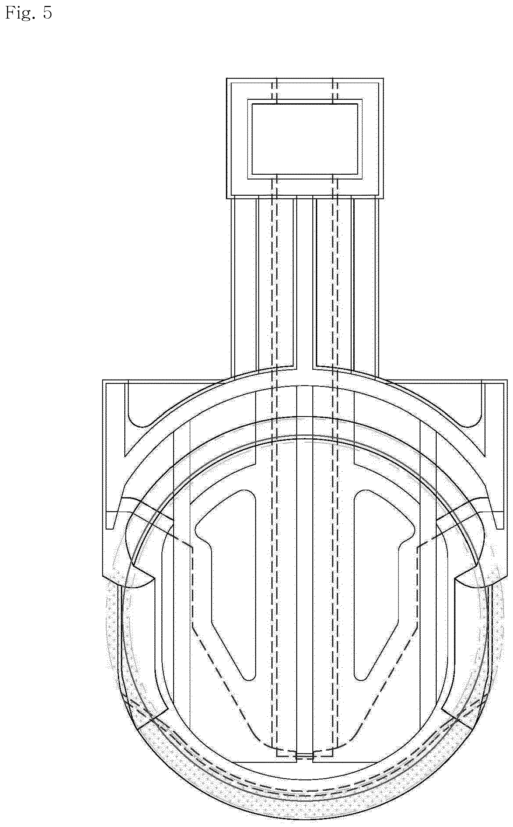

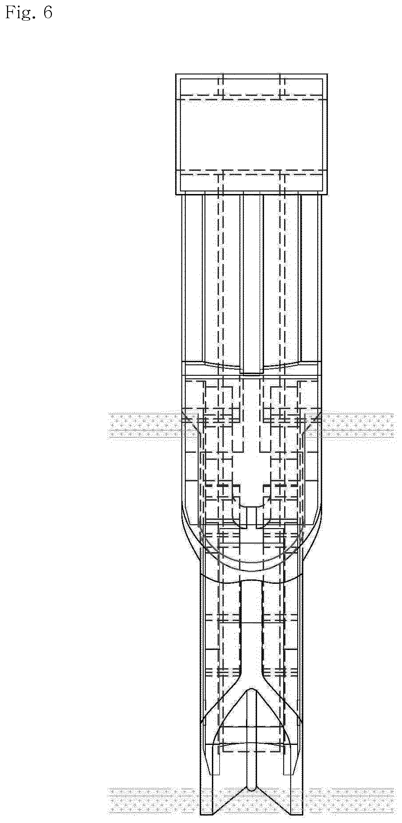

Further, one example, in which the low-torque water shutoff-type line stopping valve using stepwise pressure point support according to the present invention, shown in FIG. 4, is inserted into a pipe after the pipe is perforated, will be described with reference to FIGs. 5 and 6.

FIGs. 5 and 6 are views illustrating one example of insertion of the multistage-type disc into a perforated pipe using the low-torque water shutoff-type line stopping valve using stepwise pressure point support according to the present invention.

Particularly, referring to FIG. 6, one side of the pipe may be perforated using the above-described apparatus on which the applicant of the present invention obtained a patent, and the disc valve according to the present invention may be inserted into the perforated area.

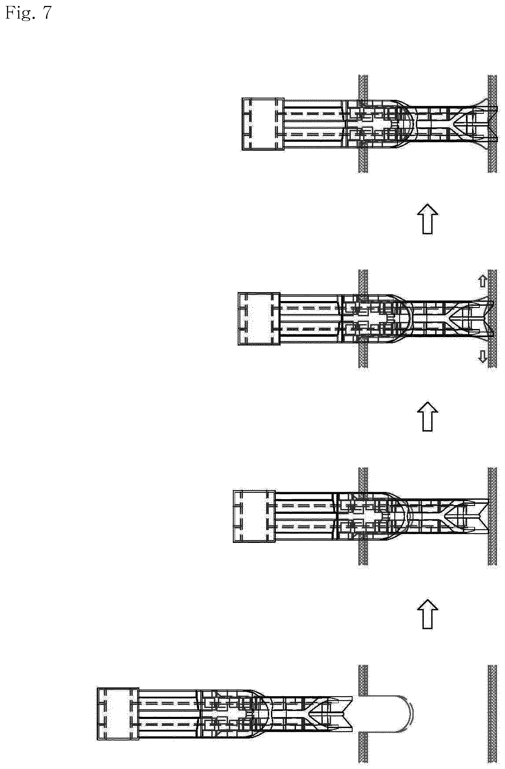

However, although FIGs. 5 and 6 illustrate that the rubber member 10 deviates from the pipe, the rubber member 10 is actually deformed by pressure at which the valve is inserted into the pipe 10, as shown in FIG. 7.

FIG. 7 is a view illustrating a process of blocking the flow path of a pipe by inserting the multistage-type disc of the low-torque water shutoff-type line stopping valve using stepwise pressure point support according to the present invention into the pipe.

As the flow path of the pipe is blocked through the process shown in FIG. 7, in case of the conventional disc, force is merely applied in the downward direction without any functional element, and thus, a worker requires lots of power to operate the valve so as to lower the disc, and damages not only the valve but also the pipe 100. Further, for this reason, stress may be transmitted to the valve or the stem 132 and thus damage these elements, and the pipe 100 may be bent or damaged.

However, the multistage-type disc 200 according to the present invention may enable water stoppage while sweeping out foreign substances, which disrupt water stoppage, using lateral dispersion force due to the interaction of the auxiliary groove part 24a and the sweeping groove part 12a from a point in time at which the disc comes into contact with the bottom surface of the pipe 100, and may reduce power required for water stoppage compared to the conventional disc so as to be capable of stopping water using lower torque.

That is, the rubber member 10 is formed of rubber and is thus deformable, and in this case, the range of deforming the sweeping groove part 12a of the rubber member 10 may be further increased due to formation of the auxiliary groove part 24a,
and such a sweeping groove part 12a is deformed, as shown in FIG. 7.

That is, an inverted v-shaped groove of the sweeping groove part 12a may become flat by applying pressure to the rubber member 10 and, in this process, the wall of the sweeping groove part 12a performs two-point support in which the wall of the sweeping groove part 12a is supported by the inner surface of the pipe at two points, then the two points sweep the inner surface of the pipe outwards, and the disc finally achieves surface contact with and is supported by the inner surface of the pipe,
during such a sweeping process, the wall of the sweeping groove part comes into surface contact with the inner surface of the pipe while sweeping foreign substances, fur or the like generated on the inner surface of the pipe due to continuous formation of the flow path, and thus cleans an area of the pipe which comes into contact with the sweeping groove part, thereby being capable of improving adhesiveness and airtightness.

Moreover, referring to FIG. 2 or the final stage of FIG. 7, a protrusion (no reference numeral) is formed at one side of the sweeping groove part 12a, and thus, when the wall of the sweeping groove part comes into surface contact with and is supported by the inner surface of the pipe, the protrusion is adhered to the inner surface of the pipe so as to prevent slip, thereby being capable of further improving airtightness.

Further, both ends of the sweeping groove part 12a meet to form a v-shape, a side recess 12a' (with reference to FIG. 1) is formed at the side at which both ends of the sweeping groove part 12a meet, and the side recess 12a' functions to assist the sweeping groove part 12a to spread due to pressure.

Further, the shape-maintaining protrusion 12b of is formed on the side surfaces of the inner area blocking part 12 of the rubber member 10 at one side, as described above, and the shape-maintaining protrusion 12b comes into direct contact with the inner surface of the pipe, and may thus function to block the flow path and to prevent the sweeping groove part 12a from spreading when the sweeping groove part 12a is returned to the original shape thereof after use of the disc valve.

Hereinafter, a process for constructing the apparatus for constructing the line stopping valve having the above-described configuration according to the present invention will be described.

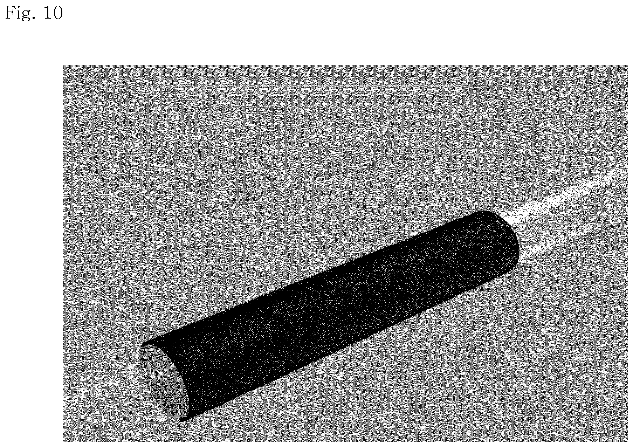

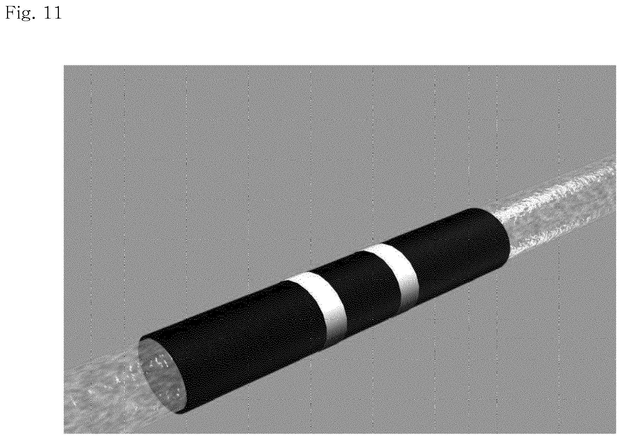

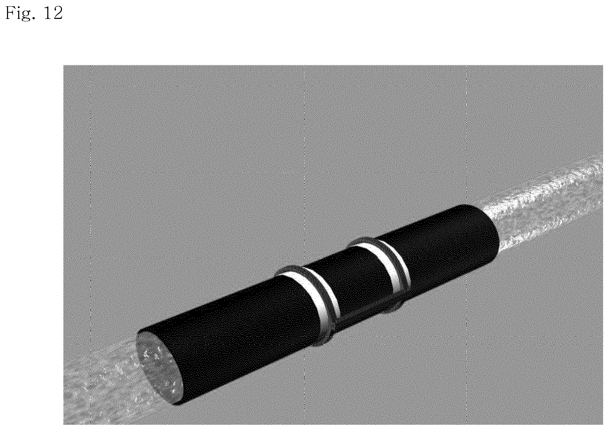

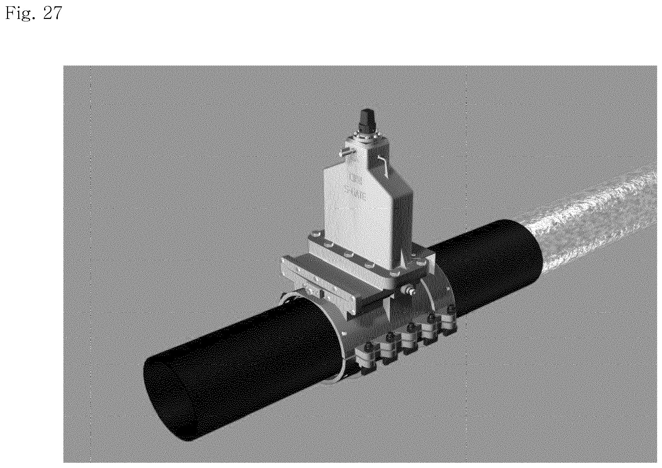

This process will be described with reference to FIGs. 10 to 28.

FIGs. 10 to 28 are views illustrating one example of installation of the low-torque water shutoff-type line stopping valve using stepwise pressure point support according to the present invention.

After taping is performed on a pipe 100 for construction, gaskets (i.e., the body packings 111) are mounted on the pipe (with reference to FIGs. 10 to 12).

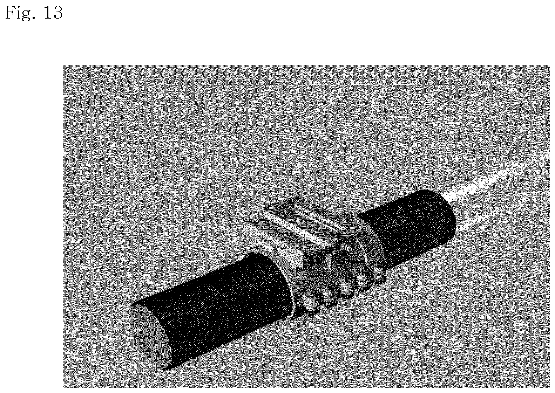

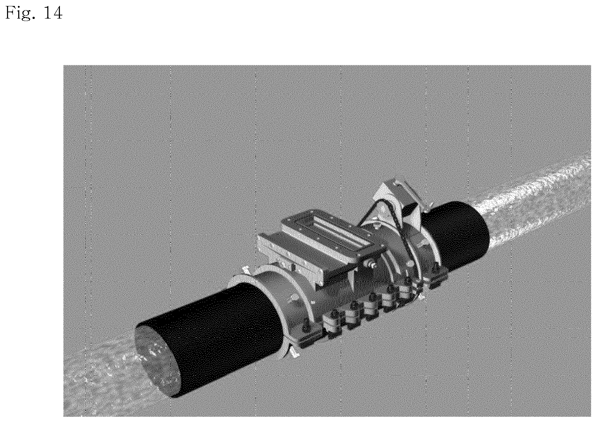

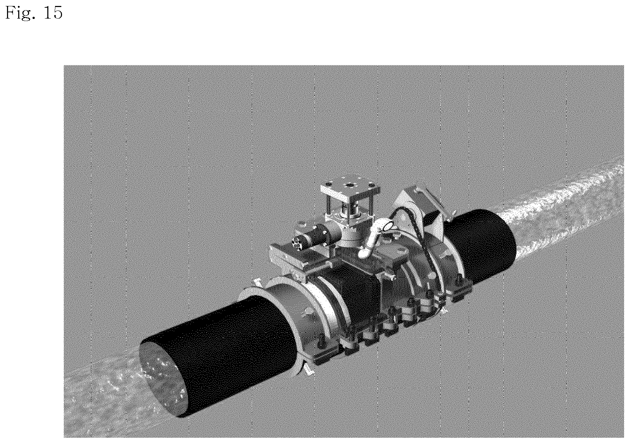

Thereafter, upper and lower panels (the hemispheric bodies 112) are mounted on the pipe, as shown in FIG. 13, a rotating device is installed on the upper and lower panels, as shown in FIG. 14, and a punching apparatus is installed thereon, as shown in FIG. 15.

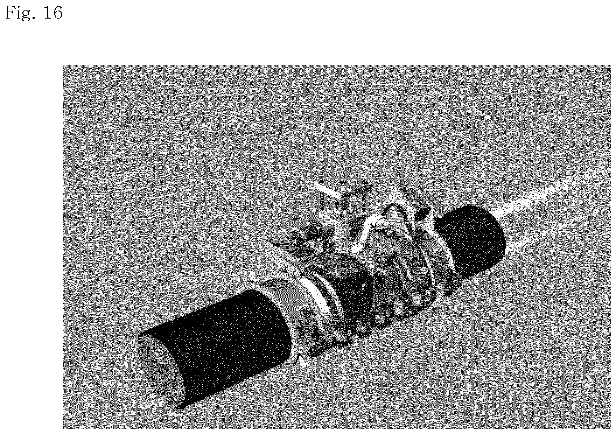

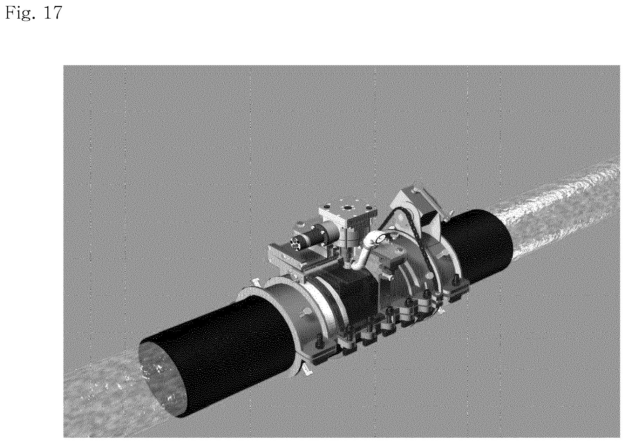

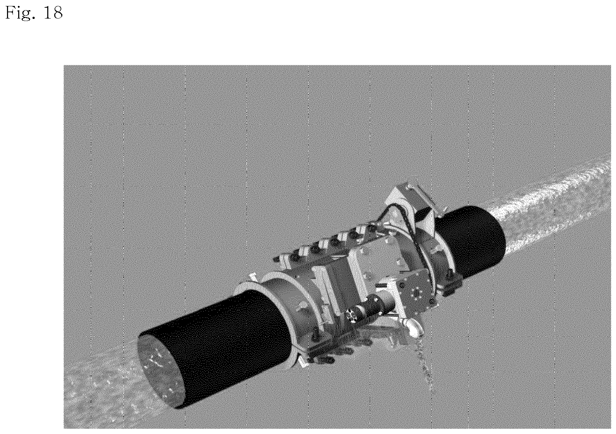

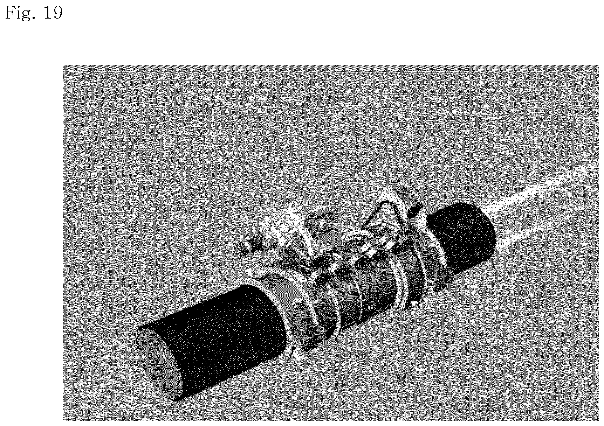

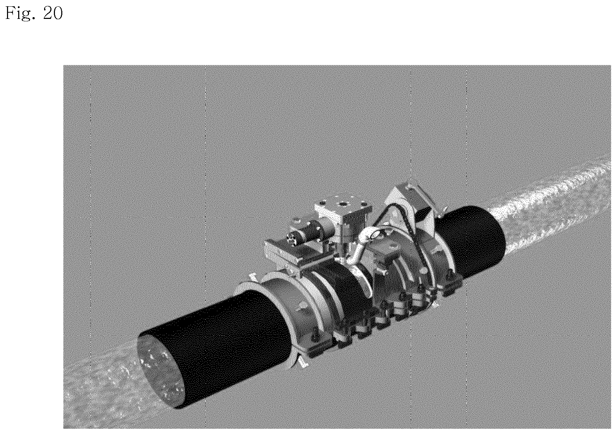

Further, by opening the auxiliary valve, as shown in FIG. 16, cutting is performed (with reference to FIG. 17). In cutting, the pipe 100 is perforated to form a hole having a designated length (with reference to FIG. 20) by rotating the rotating device in the leftward and rightward directions, as shown in FIGs. 18 and 19.

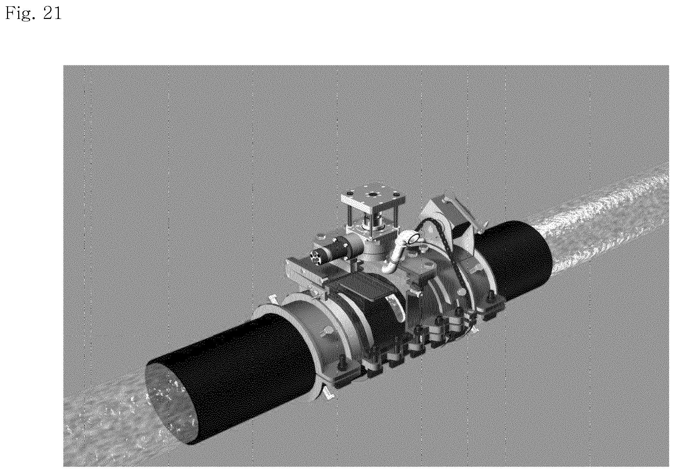

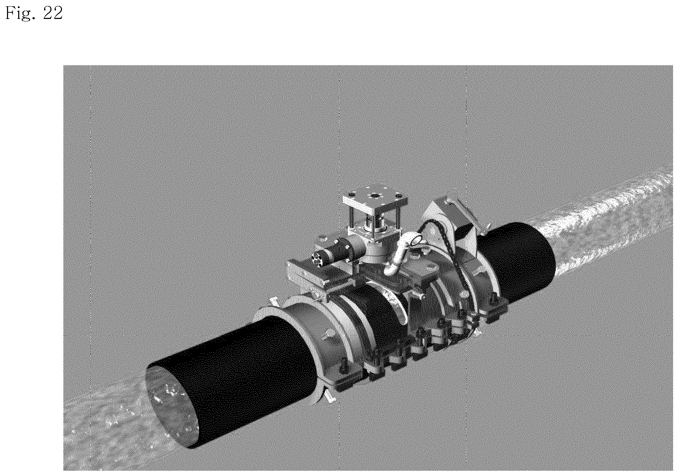

Thereafter, the construction apparatus is raised by returning the punching apparatus to the original position thereof, as shown in FIG. 21, and then, the auxiliary valve is closed, as shown in FIG. 22.

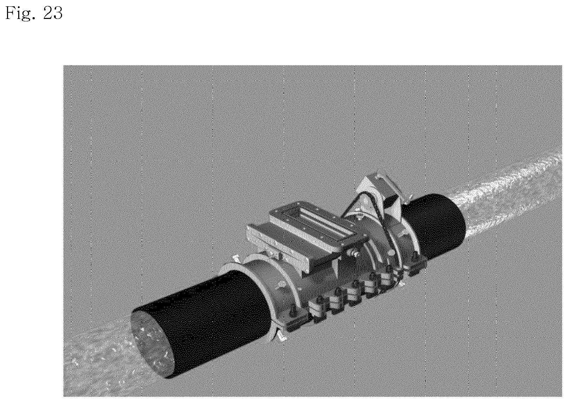

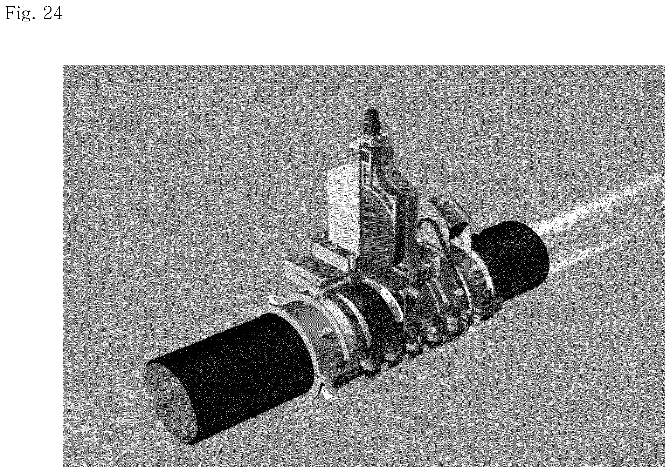

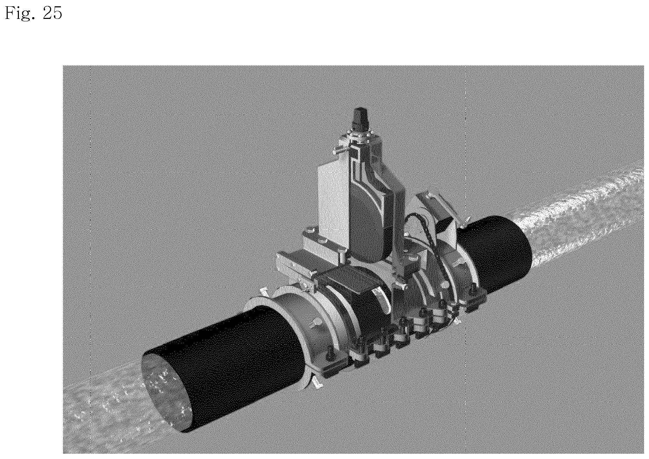

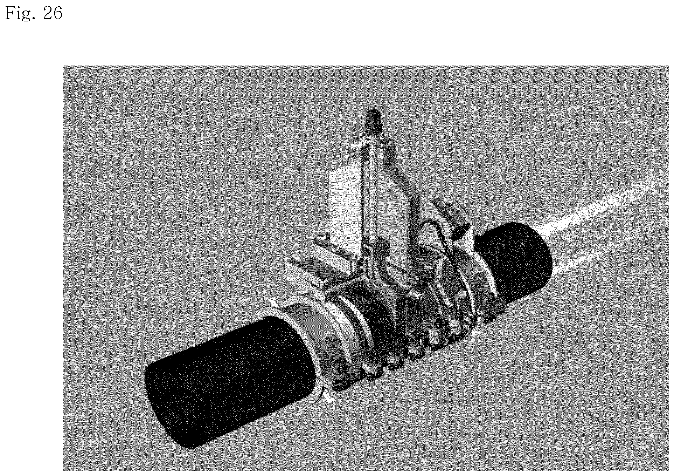

Thereafter, the punching apparatus is removed, as shown in FIG. 23, the bonnet 130 provided with the multistage-type disc 200 is installed thereon, as shown in FIG. 24, and the multi-state type disc 200 is inserted into the pipe 100 through the hole, as shown in FIGs. 25 and 26.

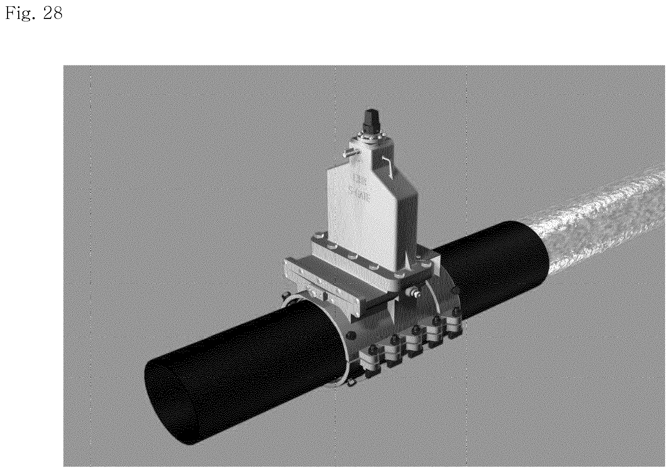

Further, the upper and lower panels are fixed to the outer surface of the pipe 100 by coupling fixing screws to the upper and lower panels, as shown in FIG. 28.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A low-torque water shutoff-type line stopping valve using stepwise pressure point support, comprising a valve body (110) adapted to be mounted on a pipe (100) so as to surround an outer diameter thereof; a punching apparatus mounted in an opening (114) of an upper hemispheric body (112) of the valve body (110) and configured to form a hole (102) in an outer diameter surface of the pipe (100); and a bonnet (130) mounted at an upper portion of the valve body (110) so as to interference-fit a multistage-type disc (200) into the pipe,
wherein the line stopping valve comprises:
the low-torque water shutoff-type multistage-type disc (200) configured to be easily adhered to an inner surface of the pipe so as to support the inner surface of the pipe while removing foreign substances from the inner surface of the pipe, and thus to reduce power required for water stoppage compared to a conventional disc so as to be capable of stopping water using lower torque,
wherein the multi-stage disc (200):
comprises a rubber member (10) and a casting member (20); and
when the multi-stage disc comes into contact with the inner surface of the pipe so as to block a flow path, two points of the multistage-type disc initially come into contact with and are supported by the inner surface of the pipe, then the two points supported by pressure sweep the inner surface of the pipe outwards, and thus the multistage-type disc finally achieves surface contact with and is supported by the inner surface of the pipe so as to remove the foreign substances from the inner surface of the pipe and thus to clean an area of the pipe which comes into contact with the multi-state type disc, , wherein the rubber member (10) comprises:
a perforated area closing part (11) adapted to be inserted into a perforated area of the pipe so as to perform a closing function;
an inner area blocking part (12) configured to extend in the downward direction of the closing part (11) and to have a narrower width than the closing part (11) so as to cut off the inside of the pipe;
a first step (11a) formed between the closing part (11) and the blocking part (12) and configured to have a slope so as to form a wide top and narrow bottom structure;
guide parts (11b) configured to protrude from both sides of the closing part (11) and to have one flat surface, and guided along an inner wall of the bonnet (130);
a column (13) configured to extend upwards from the closing part; and
a bracket (14) located on the column (13), wherein the inner area blocking part (12) is formed to bend along the inner shape of the pipe, and includes:
a sweeping groove part (12a) configured to be concave in a V-shape and formed on an entirety of a lower surface thereof and side surfaces thereof at one side; and
a shape-maintaining protrusion (12b) configured to protrude convexly in a v-shape and formed in remaining areas of the side surfaces thereof other than the sweeping groove part (12a), wherein the casting member (20) comprises:
a bracket (21) connected to a stem (132) of the bonnet (130) ;
a column (22) configured to extend downwards from the bracket (21);
a closing part frame (21) formed at a lower portion of the column (22) and configured to have the same shape as the perforated area closing part (11) and a smaller size than the perforated area closing part (11) so as to be located inside the perforated area closing part (11);
a second step (23a) formed to have a stepped shape so as to be located inside the first step (11a) of the rubber member (10);
second guide parts (23b) configured to protrude upwards from both sides of the closing part frame (23) so as to be located inside the guide parts (11b) of the rubber member (10); and
a blocking part frame (24) formed at the lower portion of the closing part frame (23) and located inside the inner area blocking part (12) of the rubber member (10),
wherein the blocking part frame (24) comprises an auxiliary groove part (24a) configured to be concave inwards and formed on lower and side surfaces thereof, wherein:
the shape-maintaining protrusion (12b) is formed on the side surfaces of the inner area blocking part (12) at one side; and
the shape-maintaining protrusion (12b) configured to come into direct contact with the inner surface of the pipe so as to block the flow path, and prevents the sweeping groove part (12a) from spreading when the sweeping groove part (12a) is returned to an original shape thereof after use of the disc valve, and
wherein both ends of the sweeping groove part (12a) meet to form a v-shape, a side recess (12a') is formed at the side at which both ends of the sweeping groove part (12a) meet, and the side recess (12a') functions to assist the sweeping groove part (12a) to spread due to pressure.

## Patentansprüche

1. Wasserabsperrventil mit niedrigem Drehmoment zum Absperren einer Leitung unter Verwendung einer stufenweisen Druckpunktunterstützung, das aufweist: einen Ventilkörper (110), der an einem Rohr (100) montierbar ist, um einen Außenumfang davon zu umgeben; eine Stanzvorrichtung, die in einer Öffnung (114) eines oberen halbkugelförmigen Körpers (112) des Ventilkörpers (110) montiert und dazu ausgebildet ist, ein Loch (102) in einer Außenumfangsfläche des Rohrs (100) zu bilden; und ein Oberteil (130), das an einem oberen Abschnitt des Ventilkörpers (110) montiert ist, so dass eine mehrstufige Scheibe (200) durch Presspassung in das Rohr eingepasst werden kann,
wobei das Wasserabsperrventil aufweist:
die mehrstufige Scheibe (200) zur Wasserabsperrung mit niedrigem Drehmoment, die so ausgebildet ist, dass sie leicht an einer Innenfläche des Rohrs angehaftet werden kann, um die Innenfläche des Rohrs zu stützen, während Fremdkörper von der Innenfläche des Rohrs entfernt werden, und somit die Leistung zu reduzieren, die im Vergleich zu einer herkömmlichen Scheibe für die Wasserabstellung erforderlich ist, um Wasser mit einem niedrigen Drehmoment abstellen zu können,
wobei die mehrstufige Scheibe (200) aufweist:
ein Gummielement (10) und ein Gusselement (20); und
wenn die mehrstufige Scheibe mit der Innenfläche des Rohrs in Kontakt kommt, um einen Strömungsweg zu blockieren, zwei Punkte der mehrstufigen Scheibe zuerst mit der Innenfläche des Rohrs in Kontakt kommen und von dieser gestützt werden, dann kehren die beiden durch Druck unterstützten Punkte die Innenfläche des Rohrs nach außen ab, und somit erzielt die mehrstufige Scheibe schlussendlich Flächenkontakt mit der Innenfläche des Rohrs und wird von dieser gestützt, um die Fremdkörper von der Innenfläche des Rohrs zu entfernen und so einen Bereich des Rohrs zu reinigen, der mit der mehrstufigen Scheibe in Kontakt kommt, wobei das Gummielement (10) aufweist:
ein Perforationsbereich-Schließteil (11), das in einen perforierten Bereich des Rohrs einsetzbar ist, um eine Schließfunktion auszuführen;
ein Innenbereich-Blockierteil (12), das so ausgebildet ist, dass es sich in der Abwärtsrichtung des Schließteils (11) erstreckt und eine geringere Breite als das Schließteil (11) aufweist, um das Innere des Rohrs abzutrennen;
eine erste Stufe (11a), die zwischen dem Schließteil (11) und dem Blockierteil (12) ausgebildet und so ausgestaltet ist, dass sie eine Neigung hat, um eine breite obere und eine schmale untere Struktur zu bilden;
Führungsteile (11b), die so ausgebildet sind, dass sie von beiden Seiten des Schließteils (11) vorstehen und eine flache Oberfläche aufweisen, und die entlang einer Innenwand des Oberteils (130) geführt sind;
eine Säule (13), die so ausgebildet ist, dass sie sich ausgehend von dem Schließteil nach oben erstreckt; und
eine Halterung (14), die sich an der Säule (13) befindet, wobei das Innenbereich-Blockierteil (12) so ausgebildet ist, dass es sich entlang der inneren Form des Rohrs biegt, und aufweist:
ein Kehrnutteil (12a), das so ausgebildet ist, dass es in einer V-Form konkav ist und auf einer gesamten unteren Fläche davon und auf Seitenflächen davon auf einer Seite ausgebildet ist; und
einen formstabilen Vorsprung (12b), der so ausgebildet ist, das er konvex in einer V-Form vorsteht und in verbleibenden Bereichen der Seitenflächen davon ausgebildet ist, die sich von denen des Kehrnutteils (12a) unterscheiden, wobei das Gusselement (20) aufweist:
eine Halterung (21), die mit einem Schaft (132) des Oberteils (130) verbunden ist;
eine Säule (22), die so ausgebildet ist, dass sie sich ausgehend von der Halterung (21) nach unten erstreckt;
einen Schließteilrahmen (21), der an einem unteren Abschnitt der Säule (22) ausgebildet und so ausgestaltet ist, dass er die gleiche Form wie das Perforationsbereich-Schließteil (11) aufweist und kleiner als das Perforationsbereich-Schließteil (11) ist, um sich innerhalb des Perforationsbereich-Schließteils (11) zu befinden;
eine zweite Stufe (23a), die so ausgebildet ist, dass sie eine gestufte Form aufweist, um sich innerhalb der ersten Stufe (11a) des Gummielements (10) zu befinden;
zweite Führungsteile (23b), die so ausgebildet sind, dass sie ausgehend von beiden Seiten des Schließteilrahmens (23) nach oben vorstehen, um sich innerhalb der Führungsteile (11b) des Gummielements (10) zu befinden; und
einen Blockierteilrahmen (24), der an dem unteren Abschnitt des Schließteilrahmens (23) ausgebildet ist und sich innerhalb des Innenbereich-Blockierteils (12) des Gummielements (10) befindet,
wobei der Blockierteilrahmen (24) ein Hilfsnutteil (24a) aufweist, das so ausgebildet ist, dass es nach innen konkav ist und auf unteren Flächen und Seitenfläche davon ausgebildet ist, wobei:
der formstabile Vorsprung (12b) auf den Seitenflächen des Innenbereich-Blockierteils (12) an einer Seite ausgebildet ist; und
der formstabile Vorsprung (12b) so ausgebildet ist, dass er in direkten Kontakt mit der Innenfläche des Rohrs kommt, um den Strömungsweg zu blockieren, und das Kehrnutteil (12a) daran hindert, sich auszudehnen, wenn das Kehrnutteil (12a) nach Verwendung des Scheibenventils in seine ursprüngliche Form zurückgebracht wird, und
wobei sich die beiden Enden des Kehrnutteils (12a) treffen, um eine V-Form zu bilden, eine Seitenaussparung (12a') an der Seite ausgebildet ist, an der sich die beiden Enden des Kehrnutteils (12a) treffen, und die Seitenaussparung (12a') dazu dient, dem Kehrnutteil (12a) zu helfen, sich durch Druck auszudehnen.

## Revendications

1. Vanne d'arrêt de ligne du type à coupure d'eau à faible couple utilisant un support de point de pression pas à pas, comportant un corps de vanne (110) adapté pour être monté sur un tuyau (100) de manière à entourer un diamètre extérieur de celui-ci ; un appareil de poinçonnage monté dans une ouverture (114) d'un corps hémisphérique supérieur (112) du corps de vanne (110) et conçu pour former un trou (102) dans une surface de diamètre extérieur du tuyau (100) ; et un chapeau (130) monté sur une partie supérieure du corps de vanne (110) de manière à ajuster de manière serrée un disque du type à étages multiples (200) dans le tuyau,
dans lequel la vanne d'arrêt de ligne comporte
le disque du type à étages multiples (200) du type à coupure d'eau à faible couple conçu pour adhérer facilement à une surface interne du tuyau de manière à soutenir la surface interne du tuyau tout en éliminant les substances étrangères de la surface interne du tuyau, et donc pour réduire la puissance requise pour l'arrêt de l'eau par rapport à un disque conventionnel de manière à être capable d'arrêter l'eau en utilisant un couple plus faible,
dans lequel le disque à étages multiples (200) :
comporte un élément en caoutchouc (10) et un élément en fonte (20) ; et
lorsque le disque à étages multiples entre en contact avec la surface interne du tuyau de manière à bloquer une trajectoire d'écoulement, deux points du disque à étages multiples entrent d'abord en contact avec la surface interne du tuyau et sont supportés par celle-ci, puis les deux points supportés par la pression essuient la surface interne du tuyau vers l'extérieur, et ainsi le disque de type à étages multiples atteint finalement une surface de contact avec la surface interne du tuyau et est supporté par celle-ci, de manière à éliminer les substances étrangères de la surface interne du tuyau et donc à nettoyer une zone du tuyau qui entre en contact avec le disque de type à étages multiples, dans lequel l'élément en caoutchouc (10) comporte :
une partie de fermeture (11) de la zone perforée conçue pour être insérée dans une zone perforée du tuyau afin d'assurer une fonction de fermeture ;
une partie de blocage de la zone interne (12) conçue pour s'étendre dans la direction descendante de la partie de fermeture (11) et pour avoir une largeur plus étroite que la partie de fermeture (11) de manière à couper l'intérieur du tuyau ;
un premier gradin (11a) formé entre la partie de fermeture (11) et la partie de blocage (12) et conçu pour avoir une pente de manière à former une structure large en haut et étroite en bas ;
des parties de guidage (11b) conçues pour faire saillie des deux côtés de la partie de fermeture (11) et pour avoir une surface plane, et guidées le long d'une paroi interne du chapeau (130) ;
une colonne (13) conçue pour s'étendre vers le haut à partir de la partie de fermeture ; et
un support (14) situé sur la colonne (13), dans lequel la partie de blocage de la zone intérieure (12) est formée pour se plier le long de la forme intérieure du tuyau, et comporte :
une partie de rainure d'essuyage (12a) conçue pour être concave en forme de V et formée sur l'ensemble de sa surface inférieure et de ses surfaces latérales d'un côté ; et
une saillie de maintien de forme (12b) conçue pour faire saillie de manière convexe en forme de V et formée dans les zones restantes de leurs surfaces latérales autres que la partie de la rainure d'essuyage (12a), dans laquelle l'élément de moulage (20) comporte :
un support (21) relié à une tige (132) du chapeau (130) ;
une colonne (22) conçue pour s'étendre vers le bas à partir du support (21) ;
un cadre de partie de fermeture (21) formé dans une partie inférieure de la colonne (22) et conçu pour avoir la même forme que la partie de fermeture (11) de la zone perforée et une taille plus petite que la partie de fermeture (11) de la zone perforée de manière à être situé à l'intérieur de la partie de fermeture (11) de la zone perforée ;
un second gradin (23a) formé pour avoir une forme étagée de manière à être situé à l'intérieur du premier gradin (11a) de l'élément en caoutchouc (10) ;
des secondes parties de guidage (23b) conçues pour faire saillie vers le haut des deux côtés du cadre de la partie de fermeture (23) de manière à être situées à l'intérieur des parties de guidage (11b) de l'élément en caoutchouc (10) ; et
un cadre de partie de blocage (24) formé à la partie inférieure du cadre de partie de fermeture (23) et situé à l'intérieur de la zone intérieure de blocage (12) de l'élément en caoutchouc (10),
dans lequel le cadre de la partie de blocage (24) comporte une partie de rainure auxiliaire (24a) conçue pour être concave vers l'intérieur et formée sur les surfaces inférieures et latérales, dans lequel :
la saillie de maintien de forme (12b) est formée sur les surfaces latérales de la partie de blocage de la zone intérieure (12) d'un côté ; et
la saillie de maintien de forme (12b) est conçue pour entrer en contact direct avec la surface intérieure du tuyau de manière à bloquer la trajectoire d'écoulement, et empêche la partie de la rainure d'essuyage (12a) de s'étendre lorsque la partie de la rainure d'essuyage (12a) est ramenée à sa forme d'origine après l'utilisation de la vanne à disque, et
dans lequel les deux extrémités de la partie de la rainure d'essuyage (12a) se rejoignent pour former une forme en V, un renfoncement latéral (12a') est formé du côté où les deux extrémités de la partie de la rainure d'essuyage (12a) se rejoignent, et le renfoncement latéral (12a') a pour fonction d'aider la partie de la rainure d'essuyage (12a) à s'écarter sous l'effet de la pression.
